(19) Europäisches Patentamt / European Patent Office / Office européen des brevets

(11) **EP 4 745 414 A1**

(12) **EUROPEAN PATENT APPLICATION**
published in accordance with Art. 153(4) EPC

(43) Date of publication:
**20.05.2026 Bulletin 2026/21**

(21) Application number: **24839497.5**

(22) Date of filing: **24.06.2024**

(51) International Patent Classification (IPC):
**F15D 1/12** *(2006.01)* **B64C 23/06** *(2006.01)*

(52) Cooperative Patent Classification (CPC):
**B64C 23/06; F15D 1/12**

(86) International application number:
**PCT/JP2024/022835**

(87) International publication number:
**WO 2025/013604 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.07.2023 JP 2023113035**

(71) Applicant: **Tohoku University**
**Sendai-shi, Miyagi 980-8577 (JP)**

(72) Inventor: **YAKENO, Aiko**
**Sendai-shi, Miyagi 980-8577 (JP)**

(74) Representative: **Plasseraud IP**
**104 Rue de Richelieu**
**CS92104**
**75080 Paris Cedex 02 (FR)**

(54) **SEPARATION SUPPRESSION DEVICE AND MOVING BODY**

(57)     A separation suppression device is to be provided at a position where a fluid flows to suppress separation of the flow by strengthening a turbulence. A shape in a cross section orthogonal to the flow of the fluid has a rising portion and a falling portion, and a shape of a region surrounded by the rising portion, the falling portion, an upper base portion connecting one end of the rising portion and one end of the falling portion, and a lower base portion connecting the other end of the rising portion and the other end of the falling portion is a substantially trapezoidal shape in which a length of the lower base portion is shorter than that of the upper base portion.

[FIG. 6]

EP 4 745 414 A1

**Description**

Technical Field

The present invention relates to a separation suppression device and a moving object.

Background Art

In the related art, a vortex generator is known (see, for example, PTL 1). The vortex generator is fixed to a surface through which a fluid flows, and suppresses separation of a fluid by generating a turbulence.
The present application claims priority to Japanese Patent Application No. 2023-113035 filed in Japan on July 10, 2023, the contents of which are incorporated herein.

Citation List

Patent Literature

PTL 1: JPS51-31498A

Summary of Invention

Technical Problem

However, the vortex generator according to the related art has a large shape, and thus has a problem that the vortex generator itself becomes a resistance. In addition, the vortex generator according to the related art has a large shape, and thus affects a shape of an object (for example, a moving object) to which the vortex generator is fixed. That is, there is a problem that an aesthetic appearance of the object is impaired by fixing the vortex generator.
Therefore, an object of the invention is to provide a separation suppression device and a moving object that can effectively promote a turbulence transition of a fluid by generating a pair of vortices having a rotation axis in a flow direction and having opposite rotation directions, which is one of unstable solutions of a Navier-Stokes equation as a governing equation, and in which a shape of the separation suppression device itself is less likely to be a resistance by this method.

Solution to Problem

[1] In order to solve the above problems, an aspect of the invention is a separation suppression device that is to be provided at a position where a fluid flows to suppress separation of a flow by strengthening a turbulence, in which a shape in a cross section orthogonal to the flow of the fluid has a rising portion and a falling portion, and a shape of a region surrounded by the rising portion, the falling portion, an upper base portion connecting one end of the rising portion and one end of the falling portion, and a lower base portion connecting the other end of the rising portion and the other end of the falling portion is a substantially trapezoidal shape in which a length of the lower base portion is shorter than that of the upper base portion.

[2] An aspect of the invention is the separation suppression device described in the above [1], in which a rotation direction of a vortex generated in the rising portion and a rotation direction of a vortex generated in the falling portion are different from each other, and the lower base portion has a convex portion configured to separate the vortex generated in the rising portion and the vortex generated in the falling portion from each other.

[3] An aspect of the invention is the separation suppression device described in the above [2], in which a shape of the convex portion in the cross section orthogonal to the flow of the fluid is a substantially trapezoidal shape in which a side of the lower base portion is a lower base, a side of the upper base portion is an upper base, and the upper base is shorter than the lower base, and a height of the substantially trapezoidal shape is lower than a height of the substantially trapezoidal shape having the rising portion and the falling portion as sides.

[4] An aspect of the invention is the separation suppression device described in any of the above [1] to [3], in which the substantially trapezoidal shape having the rising portion and the falling portion as sides is provided continuously in a direction orthogonal to the flow of the fluid.

[5] An aspect of the invention is the separation suppression device described in the above [4], in which a flat portion substantially parallel to the upper base portion is provided between the rising portion and the falling portion in each of a plurality of the continuous substantially trapezoidal shapes.

[6] An aspect of the invention is the separation suppression device described in the above [5], in which the flat portion has a concave portion having a substantially trapezoidal shape in which a side of the lower base portion is a lower base, a side of the upper base portion is an upper base, and the upper base is longer than the lower base in the cross section orthogonal to the flow of the fluid.

[7] An aspect of the invention is the separation suppression device described in any of the above [1] to [6], in which the lengths of the upper base portion and the lower base portion are set according to an environment in which the separation suppression device is to be used.

[8] An aspect of the invention is the separation suppression device described in the above [7], in which a cycle $y^+$ in which a plurality of the continuous substantially trapezoidal shapes are arranged in the cross section orthogonal to the flow of the fluid satisfies the following equation (1), where a position in a span direction is y, a velocity of the fluid is $u_\tau$, and a dynamic viscosity coefficient is $\nu$.

[Math. 1]

$$y^+ = y u_\tau / \nu \sim 100 \quad \cdots \quad (1)$$

[9] An aspect of the invention is a moving object including: the separation suppression device described in any of the above [1] to [8], in which the separation suppression device is attached to a portion where a forward pressure gradient of a surface pressure caused by the fluid decreases in the vicinity of a separation position of the fluid.

Advantageous Effects of Invention

According to the invention, it is possible to provide a separation suppression device and a moving object that can effectively promote a turbulence transition of a fluid by generating a pair of vortices having a rotation axis in a flow direction and having opposite rotation directions, which is one of unstable solutions of a Navier-Stokes equation as a governing equation, and in which a shape of the separation suppression device itself is less likely to be a resistance.

Brief Description of Drawings

[FIG. 1] FIG. 1 is a diagram illustrating an example of a shape of a surface to which a separation suppression device according to the present embodiment is applied.
[FIG. 2] FIG. 2 is an example of a cross-sectional view of the surface to which the separation suppression device according to the present embodiment is applied, taken along a direction in which a fluid flows.
[FIG. 3] FIG. 3 is a diagram illustrating a change in the fluid flow direction in a pressure coefficient in the vicinity of the surface to which the separation suppression device according to the present embodiment is applied.
[FIG. 4] FIG. 4 is a diagram illustrating a change in the fluid flow direction in a pressure gradient in the fluid flow direction in the vicinity of the surface to which the separation suppression device according to the present embodiment is applied.
[FIG. 5] FIG. 5 is a plan view illustrating an example of the separation suppression device according to the present embodiment.
[FIG. 6] FIG. 6 is a perspective view illustrating the example of the separation suppression device according to the present embodiment.
[FIG. 7] FIG. 7 is a cross-sectional view in a span direction illustrating the example of the separation suppression device according to the present embodiment.
[FIG. 8] FIG. 8 is a schematic diagram illustrating a feature of a cross section in the span direction of the separation suppression device according to the present embodiment.
[FIG. 9] FIG. 9 is a schematic diagram illustrating orientations of vortices generated by the separation suppression device according to the present embodiment.
[FIG. 10] FIG. 10 is a schematic diagram illustrating a first modification of the separation suppression device according to the present embodiment.
[FIG. 11] FIG. 11 is a schematic diagram illustrating a second modification of the separation suppression device according to the present embodiment.
[FIG. 12] FIG. 12 is a diagram illustrating conditions of a numerical value experiment according to the present embodiment.
[FIG. 13] FIG. 13 is a first diagram illustrating an effect of the separation suppression device according to the present embodiment.

[FIG. 14] FIG. 14 is a second diagram illustrating an effect of the separation suppression device according to the present embodiment.

[FIG. 15] FIG. 15 is a diagram illustrating an evaluation method based on turbulence kinetic energy of the separation suppression device according to the present embodiment.

[FIG. 16] FIG. 16 is a diagram illustrating a shape used for an evaluation based on the turbulence kinetic energy of the separation suppression device according to the present embodiment.

[FIG. 17] FIG. 17 is a diagram illustrating an evaluation result based on the turbulence kinetic energy of the separation suppression device according to the present embodiment.

[FIG. 18] FIG. 18 is a perspective view illustrating an example of riblets according to the related art.

[FIG. 19] FIG. 19 is a cross-sectional view in a span direction of an example of the riblets according to the related art.

Description of Embodiments

[Embodiment]

Hereinafter, a separation suppression device and a moving object according to an aspect of the invention will be described in detail with reference to the accompanying drawings by using preferred embodiments. The aspect of the invention is not limited to these embodiments, and includes various modifications or improvements. That is, components described below include those that can be easily assumed by those skilled in the art and those that are substantially the same, and the components described below can be appropriately combined. In addition, various omissions, substitutions, or changes of the components can be made without departing from the gist of the invention. In the following drawings, in order to make each configuration easy to understand, a scale, the number, and the like in each structure may be different from a scale, the number, and the like in an actual structure.

First, matters that are the premise of the present embodiment will be described. A separation suppression device according to the present embodiment is installed on a surface on which a fluid flows. The surface through which the fluid flows may be, for example, a surface of a moving object. More specifically, the separation suppression device according to the present embodiment may be used instead of a vortex generator according to the related art.

The moving object on which the separation suppression device according to the present embodiment is installed may be, for example, an object moving in the air, such as an airplane or a drone, an object moving in water, such as a ship or a submersible, or an object moving on land such as a vehicle or an automatic guided vehicle (AGV). In addition, the moving object according to the present embodiment may be disposed in a propeller portion or the like such as blades of a power generation turbine.

The separation suppression device according to the present embodiment is provided at a position where the fluid flows. By providing the separation suppression device at the position where the fluid flows, the separation suppression device strengthens a turbulence, suppresses separation of the flow of the fluid, and reduces a pressure resistance. In the present embodiment, the fluid widely includes gaseous fluids and liquids such as air, water, steam, and gas.

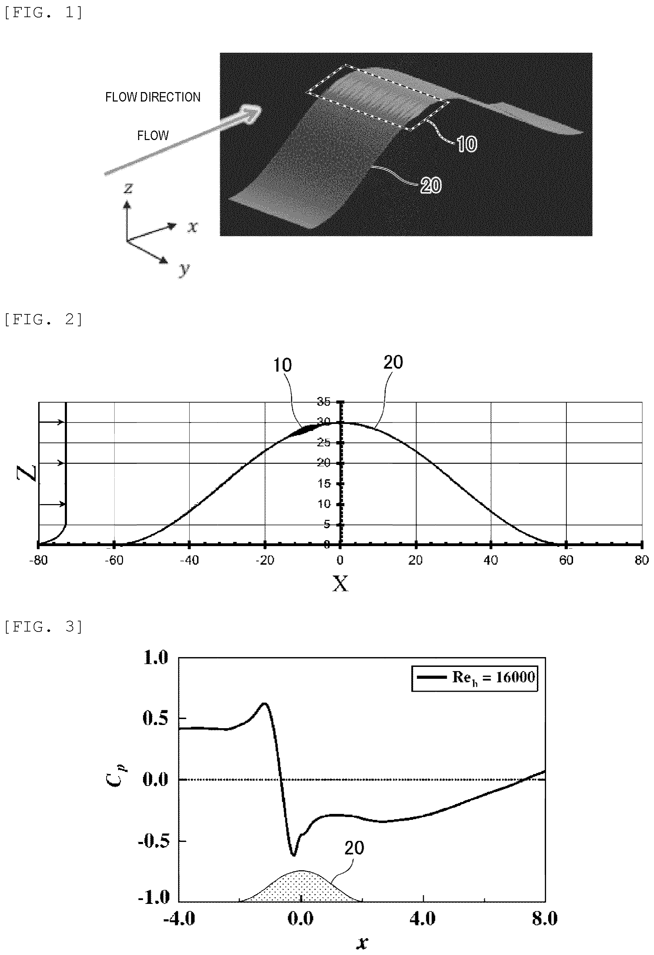

FIG. 1 is a diagram illustrating an example of a shape of a surface to which the separation suppression device according to the present embodiment is applied. An example of a shape of a surface 20 to which a separation suppression device 10 according to the present embodiment is applied will be described with reference to this figure. The separation suppression device 10 is installed on the surface 20 as illustrated. The separation suppression device 10 may be formed integrally with the surface 20, may be formed by processing the surface 20, or may be attached to the surface 20 afterward. In the following description, a positional relationship and the like of each part may be described by a three-dimensional orthogonal coordinate system of an x-axis, a y-axis, and a z-axis.

The surface 20 may be, for example, the surface of the moving object. In the illustrated example, the surface 20 has a hump shape. In addition, the illustrated hump shape has a height of 30 mm (millimeters). In the illustrated example, a fluid flows in an x-axis direction. The separation suppression device 10 is attached to a portion where a pressure of the fluid decreases in the vicinity of the separation suppression device 10. A portion where a forward pressure gradient of a surface pressure of the fluid decreases may be, for example, a portion where a positive pressure gradient (reverse pressure gradient) is present in a wake flow. By providing the separation suppression device 10 at the portion where the forward pressure gradient of the fluid decreases, the separation suppression device 10 promotes a turbulence transition, suppresses the separation of the flow of the fluid and reduces the pressure resistance by inputting momentum to the vicinity of the surface. The portion where the separation suppression device 10 according to the present embodiment is attached is not limited to the illustrated example, and the separation suppression device 10 may be attached to, for example, a portion where there is no pressure gradient, and promotes turbulence mixing.

FIG. 2 is an example of a cross-sectional view of the surface to which the separation suppression device according to the present embodiment is applied, taken along the direction in which the fluid flows. In other words, this figure is a cross-sectional view in an x-z plane of FIG. 1. As illustrated in FIG. 2, the surface 20 has the hump shape with the height of 30 [mm]. The hump shape is present from a position of -60 [mm] to a position of +60 mm in the x-axis direction. The separation suppression device 10 is present at a position of about -15 [mm] to 5 [mm] in the x-axis direction. Specifically, the position of about -15 [mm] to 5 [mm] in the x-axis direction is the portion where the forward pressure gradient of the fluid decreases.

FIG. 3 is a diagram illustrating a change in the fluid flow direction in a pressure coefficient in the vicinity of the surface to which the separation suppression device according to the present embodiment is applied. A horizontal axis in this figure indicates a position in the x-axis direction. In addition, a vertical axis in this figure indicates a value of the pressure coefficient. As illustrated, the surface 20 is present around a position of x = 0.0. This figure illustrates a change in a pressure coefficient $C_p$ in the x-axis direction. Assuming that a static pressure on the surface 20 is p-bar, the pressure coefficient $C_p$ can be expressed by the following equation (2).

[Math. 2]

$$C_p = (\bar{p} - p_\infty)/(1/2\rho_\infty u_\infty^2) \quad \cdots \quad (2)$$

As illustrated, the pressure coefficient $C_p$ is about 0.4 at a point away from the surface 20 in an x-axis negative direction, but once increases from about 0.6 to about 0.7 as the point approaches the surface 20. The pressure coefficient $C_p$ decreases suddenly in the middle of the surface 20. The separation suppression device 10 is preferably provided at a portion where the pressure coefficient $C_p$ decreases suddenly in the x-axis direction in this way. The pressure coefficient $C_p$ that has decreased suddenly increases as the fluid flows in an x-axis positive direction.

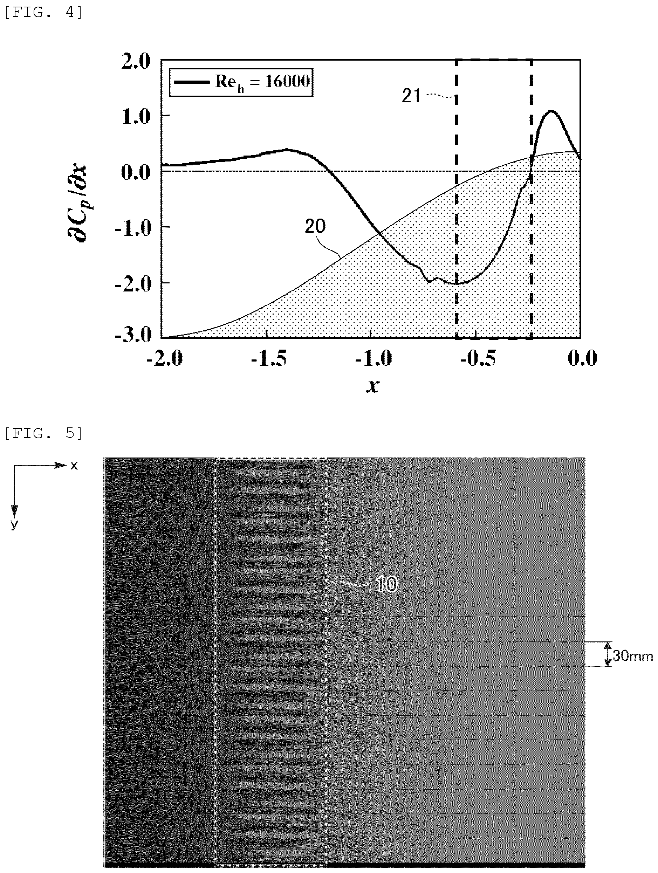

FIG. 4 is a diagram illustrating a change in the fluid flow direction in a pressure gradient in the fluid flow direction in the vicinity of the surface to which the separation suppression device according to the present embodiment is applied. A horizontal axis in this figure represents a position in the x-axis direction. In addition, a vertical axis in this figure indicates an amount of change in the pressure gradient in the x-axis direction. As illustrated, the surface 20 is present with x = 0.0 as a vertex. In this figure, only an upstream portion of the shape of the surface 20 is illustrated. This figure illustrates a change in the x-axis direction in the pressure gradient in the fluid flow direction. The pressure gradient is negative as illustrated. A magnitude of the pressure gradient can be expressed by the following expression (3) in a range from x = -0.6 to -0.25 (in the figure, a broken line portion indicated by a reference numeral 21).

[Math. 3]

$$\partial^2 \bar{p}/\partial x^2 > 0 \quad \cdots \quad (3)$$

The separation suppression device 10 is preferably installed in the broken line portion indicated by the reference numeral 21 in the figure.

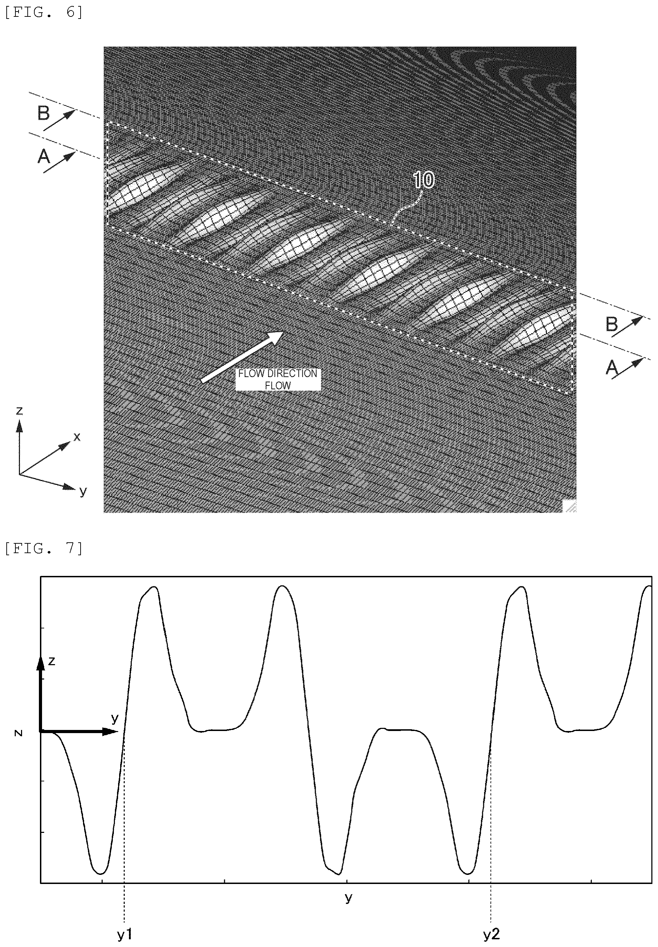

FIG. 5 is a plan view illustrating an example of the separation suppression device according to the present embodiment. This figure is a plan view of the x-y plane in FIG. 1. In addition, FIG. 6 is a perspective view illustrating the example of the separation suppression device according to the present embodiment. This figure is a perspective view of the vicinity of the separation suppression device 10 in FIG. 1. As illustrated in FIGS. 5 and 6, the separation suppression device 10 has a concave portion or a convex portion extending in an x direction, and the shape is repeated at intervals of about 30 [mm] in a y direction. The shape of each of the concave portion and the convex portion extending in the x direction is maximum in an illustrated A-A cross section, and becomes smaller as a distance from the A-A cross section increases in a positive x direction or a negative x direction. That is, the concave portion and the convex portion of the separation suppression device 10 gradually become larger along the flow, and gradually become smaller along the flow with the A-A cross section as the maximum. The concave portion and the convex portion disappear at a point (for example, a B-B cross section separated by a predetermined distance in the positive x direction from the A-A cross section) separated by a predetermined distance in the direction (positive x direction or negative x direction) in which the fluid flows, from the A-A cross section in which the shapes of the concave portion and the convex portion are maximized.

FIG. 7 is a cross-sectional view in a span direction illustrating the example of the separation suppression device according to the present embodiment. The span direction is a direction orthogonal to the direction in which the fluid flows (that is, the x direction), that is, the y direction. This figure illustrates a y-z plane in FIG. 1. In addition, it can be said that this figure is a cross-sectional view of the A-A cross section illustrated in FIG. 6. A shape of the separation suppression device 10 illustrated in this figure is schematically represented by a function. Therefore, when the separation suppression device 10 is formed, a shape necessary for forming may be changed. The separation suppression device 10 has a shape obtained by repeating a plurality of cycles in the y direction with a shape from a point y1 to a point y2 as one cycle.

When the shape of the surface 20 on which the separation suppression device 10 is installed is deformed such as being curved in the span direction (y direction), the shape of the separation suppression device 10 may be deformed along the shape of the surface 20.

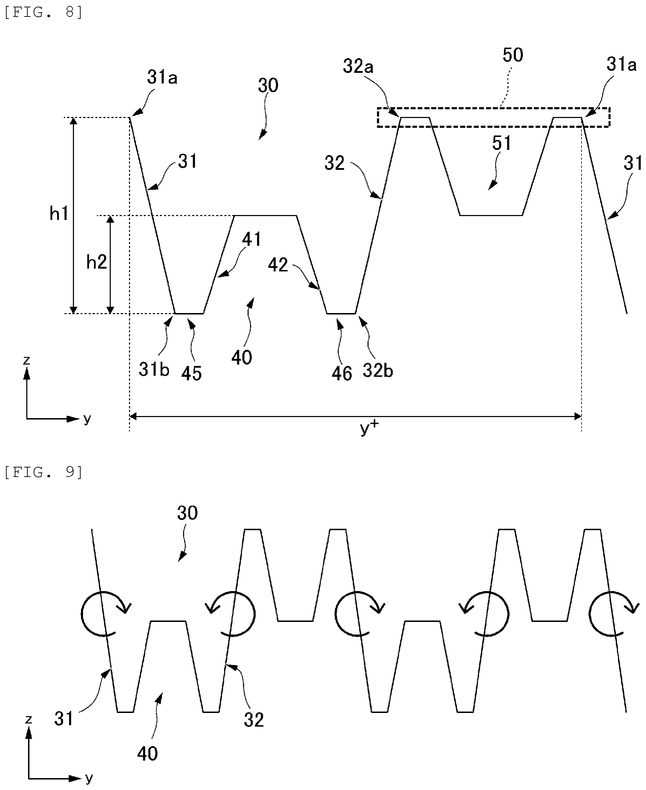

FIG. 8 is a schematic diagram illustrating a feature of a cross section in the span direction of the separation suppression device according to the present embodiment. The shape of the separation suppression device 10 will be described in detail with reference to this figure. Like FIG. 7, this figure is a cross-sectional view of the A-A cross section illustrated in FIG. 6 (that is, a cross section orthogonal to the flow of the fluid).

As illustrated, the separation suppression device 10 has falling portions 31 and rising portions 32. The falling portion 31 has a negative slope in the y-z plane. In addition, the rising portion 32 has a positive slope in the y-z plane. That is, the falling portion 31 and the rising portion 32 have slopes of different polarities.

One end of the falling portion 31 is denoted by a reference numeral 31a, and the other end is denoted by a reference numeral 31b. In addition, one end of the rising portion 32 is denoted by a reference numeral 32a, and the other end is denoted by a reference numeral 32b. As illustrated, a shape of a region having the reference numeral 31a, the reference numeral 32a, the reference numeral 31b, and the reference numeral 32b as vertices is a substantially trapezoidal shape. A line segment connecting the reference numeral 31a and the reference numeral 32a is an upper base of the trapezoidal shape, and thus may be referred to as an upper base portion. In addition, a line segment connecting the reference numeral 31b and the reference numeral 32b is a lower base of the trapezoidal shape, and thus may be referred to as a lower base portion. A range of the substantially trapezoidal shape is sufficient as long as the range includes the falling portion 31 and the rising portion 32, and widely includes a shape in which each side is connected by a smooth curved line such as a sine wave. In addition, each side forming the substantially trapezoidal shape is not necessarily a straight line, and may be a curved line. As illustrated, in the trapezoidal shape, a length of the lower base portion is shorter than the upper base portion. The lengths of the upper base portion and the lower base portion may be set in accordance with an environment in which the separation suppression device 10 is to be used. The environment in which the separation suppression device 10 is to be used may be an environment according to a moving velocity of a moving object in which the separation suppression device 10 is to be installed, a viscosity of a fluid, or the like. In the following description, the region having the reference numeral 31a, the reference numeral 32a, the reference numeral 31b, and the reference numeral 32b as vertices may be referred to as a concave portion 30.

A convex portion 40 is provided in the concave portion 30. It can also be said that the convex portion 40 is present between the falling portion 31 and the rising portion 32. In the illustrated example, a shape of the convex portion 40 is a substantially trapezoidal shape in which a side of the lower base portion of the concave portion 30 is a lower base and a side of the upper base portion of the concave portion 30 is an upper base. In addition, the upper base of the trapezoidal shape is shorter than the lower base. However, the present embodiment is not limited to this example, and the shape of the convex portion 40 may not be a trapezoidal shape. For example, a side 41 and a side 42 of the convex portion 40 may be parallel to each other. In addition, the convex portion 40 may not be present in the concave portion 30.

In order to suppress the convex portion 40 from becoming a resistance, a height h2 of the convex portion 40 is preferably lower than a height h1 of the concave portion 30. That is, the upper base of the convex portion 40 is preferably located at a position lower than the upper base of the concave portion 30. In the illustrated example, the height h2 of the convex portion 40 is about half the height h1 of the concave portion 30.

A reference numeral 45 and a reference numeral 46 denote portions of the lower base portion of the concave portion 30 that do not constitute the convex portion 40. In the illustrated example, the reference numeral 45 and the reference numeral 46 are lines parallel to the y-axis, but the reference numeral 45 and the reference numeral 46 may not be lines parallel to the y-axis. In addition, the portion may or may not be present. That is, the falling portion 31 and the side 41 of the convex portion 40, and the side 42 and the rising portion 32 may be directly connected to each other, or may be connected via the reference numeral 45 or the reference numeral 46.

In the illustrated example, in order to describe the shape of the separation suppression device 10 in detail, only the shape of one cycle is illustrated. However, as illustrated in FIGS. 5 and 6, the substantially trapezoidal shape (that is, the shape of concave portion 30) including the falling portion 31 and the rising portion 32 as sides is preferably continuously provided in the direction (that is, the y direction) orthogonal to the flow of the fluid. Since the separation suppression device 10 has the shape of the concave portion 30 for a plurality of cycles, it is possible to obtain effects of further strengthening the turbulence, suppressing the separation of the flow of the fluid, and reducing the pressure resistance.

A plurality of concave portions 30 continuous in the y direction are connected to each other via flat portions 50. That is, the flat portion 50 is a portion represented by a line connecting a point represented by the reference numeral 32a and a point represented by the reference numeral 31a. It can also be said that the flat portion 50 is substantially parallel to the upper base portion of the concave portion 30. In the illustrated example, the flat portion 50 has a concave portion 51. The concave portion 51 has a substantially trapezoidal shape in which the side of the lower base portion of the concave portion 30 is a lower base, the side of the upper base portion of the concave portion 30 is an upper base, and the upper base is longer than the lower base. The concave portion 51 is a shape generated by expressing the shape of the separation suppression device 10 by the function as an example, and the separation suppression device 10 may not have the concave portion 51 in actually forming the separation suppression device 10.

A cycle y+ in which the continuous shapes as illustrated as the shape of the separation suppression device 10 are arranged in the cross section orthogonal to the flow of the fluid is preferably calculated based on a velocity of a fluid, a dynamic viscosity coefficient, and the like. Specifically, when a position in the span direction is y, the velocity of the fluid is $u_\tau$, and the dynamic viscosity coefficient is v, the cycle y+ preferably satisfies the following equation (4).

[Math. 4]

$$ y^+ = y u_\tau / \nu \sim 100 \quad \cdots \quad (4) $$

FIG. 9 is a schematic diagram illustrating orientations of vortices generated by the separation suppression device according to the present embodiment. The vortices generated by the separation suppression device 10 will be described with reference to this figure. This figure illustrates rotation directions of the vortices. After the fluid flows through the separation suppression device 10, the vortices as illustrated are generated, for example, at portions such as the B-B cross section illustrated in FIG. 6. In the separation suppression device 10, the falling portion 31 and the rising portion 32 of the concave portion have slopes different from each other (slopes having polarities different from each other), so that the vortices in directions different from each other are generated. That is, it can also be said that the rotation direction of the vortex generated in the rising portion 32 and the rotation direction of the vortex generated in the falling portion 31 are different from each other.

In addition, the convex portion 40 is present in the concave portion 30 as illustrated. The separation suppression device 10 can separate the vortices by including the convex portion 40. That is, the convex portion 40 has a function of separating the vortex generated in the rising portion 32 and the vortex generated in the falling portion 31 from each other. It can also be said that the concave portion 30 having the convex portion 40 can clarify each of the separated vortices.

Since the concave portions 30 are continuously provided in the y direction perpendicular to the flow, vortices in different rotation directions are continuously generated in the y direction according to the present embodiment.

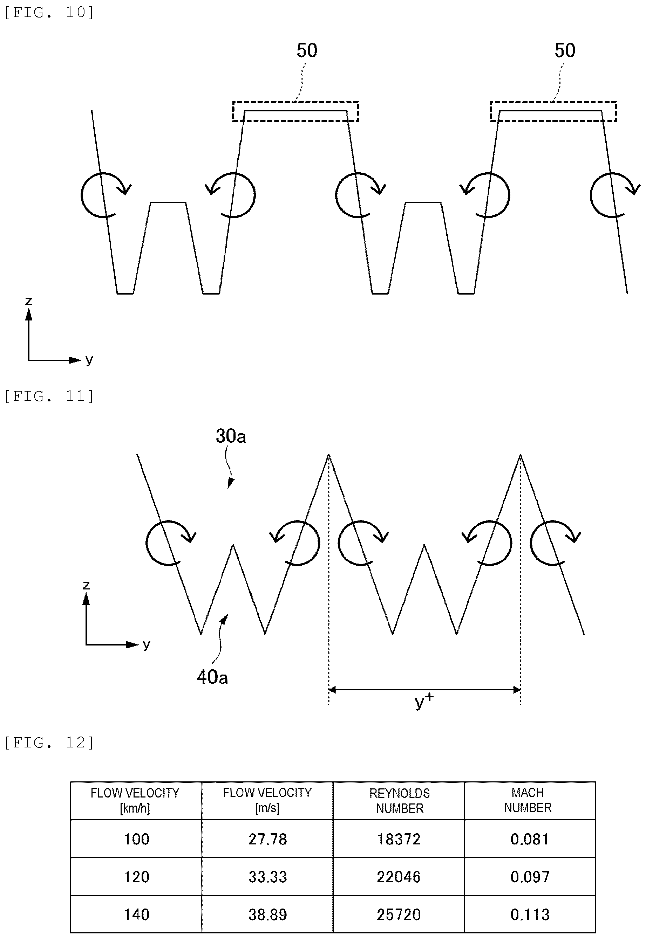

FIG. 10 is a schematic diagram illustrating a first modification of the separation suppression device according to the present embodiment. This figure illustrates a modification in which the concave portion 51 is not present in the flat portion 50. As illustrated, even if the concave portion 51 is not present, vortices having different rotation directions can be generated. Therefore, the concave portion 51 is not essential in the shape of the separation suppression device 10.

FIG. 11 is a schematic diagram illustrating a second modification of the separation suppression device according to the present embodiment. This figure illustrates a modification in which shapes indicated by the reference numeral 45 and the reference numeral 46 in FIG. 8 are not present. As illustrated, even if the shapes indicated by the reference numeral 45 and the reference numeral 46 are not present, vortices having different rotation directions can be generated. Therefore, the shapes indicated by the reference numeral 45 and the reference numeral 46 are not essential in the shape of the separation suppression device 10.

As illustrated, in the second modification, the separation suppression device 10 has a concave portion 30a instead of the concave portion 30. The concave portion 30a has a convex portion 40a instead of the convex portion 40. The convex portion 40a is different from the convex portion 40 in that the convex portion 40a is a triangular shape rather than a substantially trapezoidal shape. As illustrated, as a function of the convex portion 40, it is sufficient that vortices having different rotation directions generated by the concave portion 30 can be separated from each other, and it is not necessary that the convex portion 40 has a substantially trapezoidal shape.

Next, with reference to FIGS. 12 to 14, an example of an evaluation result of effects in a case where the separation suppression device 10 according to the present embodiment is used will be described. In order to evaluate the effects of the separation suppression device 10, the inventors performed a numerical value experiment in a case where the separation suppression device 10 is applied to a cylinder surface. In the numerical value experiment, a cylinder having a diameter of 10 [mm] was used as the surface 20. A dynamic viscosity coefficient of a fluid was set to $1.512 \times 10^{-5}$ (room temperature 20°C) [m$^2$/s]. In addition, a sound velocity was set to 343.6 (room temperature 20°C) [m/s].

FIG. 12 shows a flow velocity [m/s], a Reynolds number, and a Mach number when flow velocities of the fluid are 100 [km/h], 120 [km/h], and 140 [km/h], respectively. The numerical value experiment was performed under conditions of a Reynolds number of 25000 and a Mach number of 0.1. For a span length, a cycle boundary condition was given in the span direction.

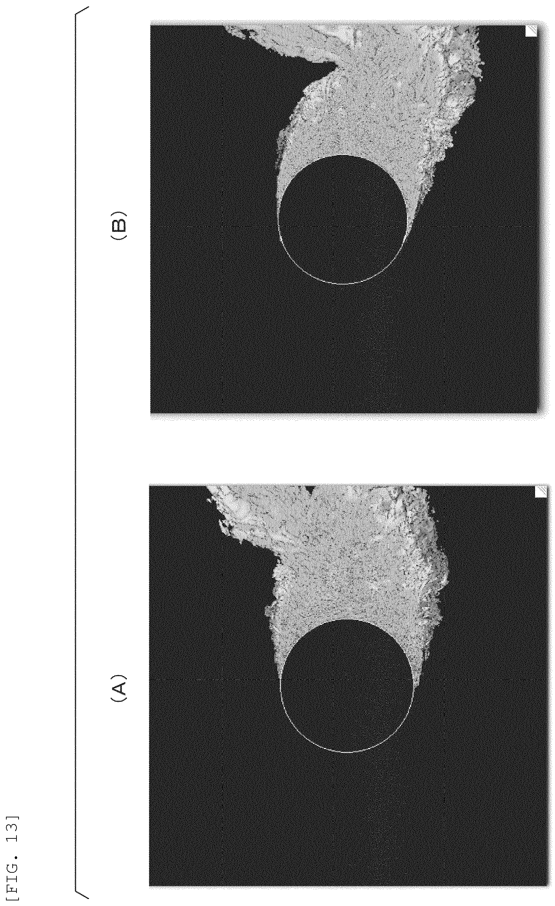

FIG. 13 is a first diagram illustrating the effect of the separation suppression device according to the present embodiment. In this figure, an instantaneous flow field in the vicinity of the cylinder is visualized when a bottom surface of the cylinder is viewed from a side. (A) of FIG. 13 is a comparative example in which the separation suppression device 10 is not used, and (B) of FIG. 13 is an example in which the separation suppression device 10 is used on a surface of the cylinder. As is clear from the figure, when the separation suppression device 10 is used, the separation of the flow tends to be suppressed.

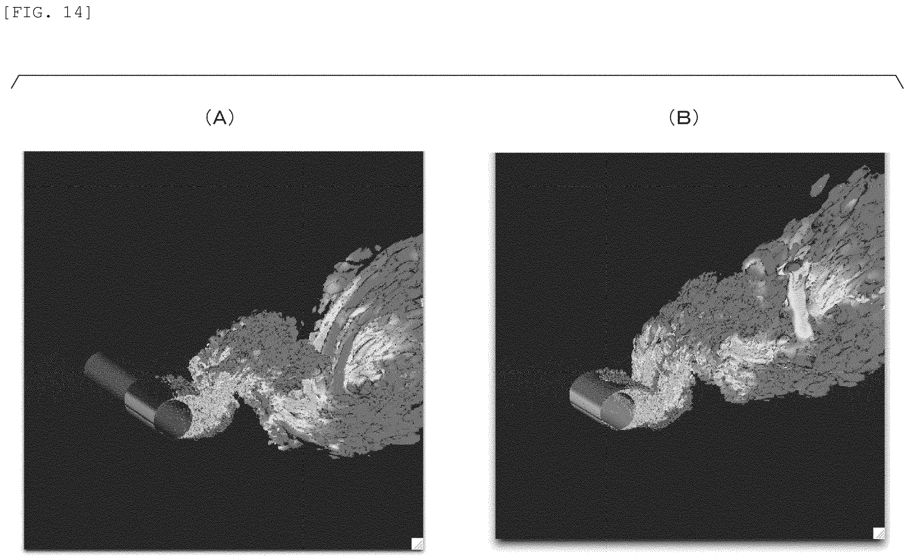

FIG. 14 is a second diagram illustrating the effect of the separation suppression device according to the present embodiment. In this figure, the instantaneous flow field in the vicinity of the cylinder is visualized when the cylinder is viewed obliquely. (A) of FIG. 14 is a comparative example in which the separation suppression device 10 is not used, and (B) of FIG. 14 is an example in which the separation suppression device 10 is used on the surface of the cylinder. As is clear from the figure, when the separation suppression device 10 is used, the turbulence tends to occur earlier.

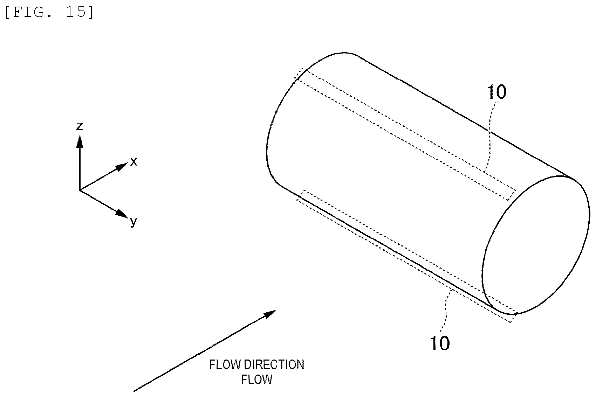

Next, with reference to FIGS. 15 to 17, an evaluation method and an evaluation result based on turbulence kinetic energy (TKE) of the separation suppression device 10 according to the present embodiment will be described. In the following description, an example in which a cylinder is used as the surface 20 will be described.

FIG. 15 is a diagram illustrating the evaluation method based on the turbulence kinetic energy of the separation suppression device according to the present embodiment. In the evaluation based on the turbulence kinetic energy, the separation suppression device 10 was installed at two portions on a side surface of the cylinder along a height direction (y direction) of the cylinder as illustrated. In addition, a fluid flow direction was the x direction.

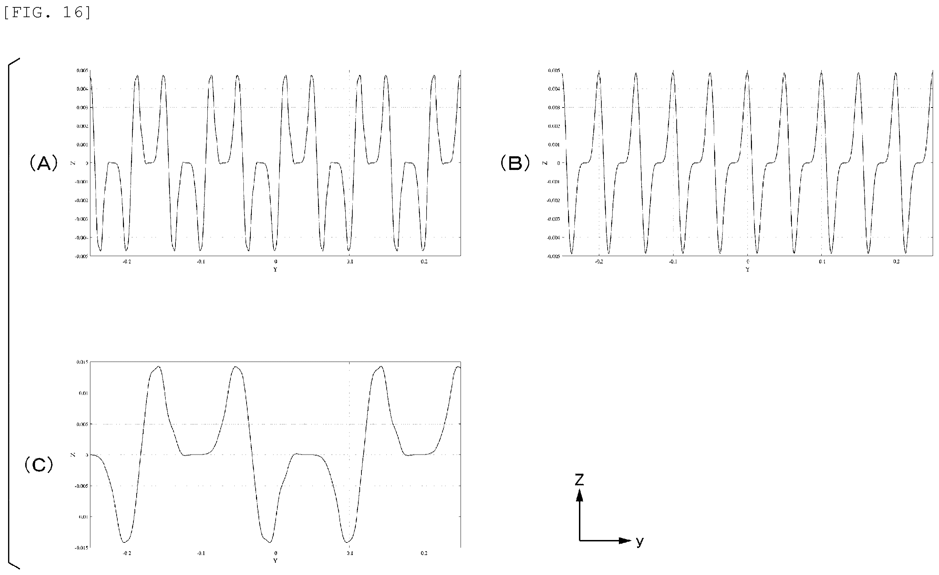

FIG. 16 is a diagram illustrating a shape used for the evaluation based on the turbulence kinetic energy of the separation suppression device according to the present embodiment. (A) of FIG. 16 illustrates a shape of the separation suppression device 10 according to the present embodiment. (B) of FIG. 16 and (C) of FIG. 16 are diagrams illustrating shapes used as comparative examples. The shape illustrated in (B) of FIG. 16 does not have a rising portion and a falling portion as in the separation suppression device 10. Therefore, when the shape illustrated in (B) of FIG. 16 is used, vortices having alternately different phases are not generated unlike the separation suppression device 10 according to the present embodiment, and vortices having the same orientation are generated. (C) of FIG. 16 is the comparative example in which the height of the separation suppression device 10 is tripled and a width is doubled.

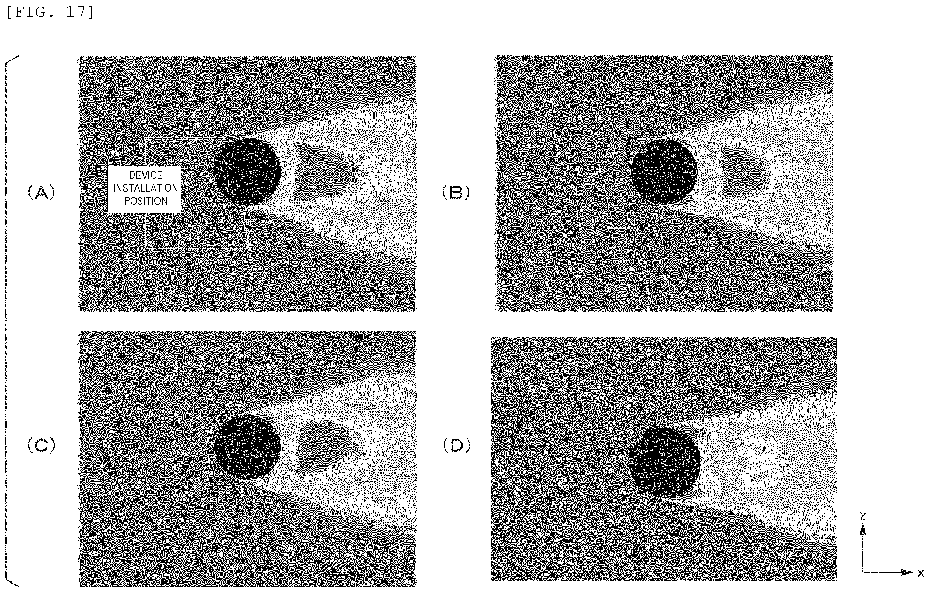

FIG. 17 is a diagram illustrating the evaluation result based on the turbulence kinetic energy of the separation suppression device according to the present embodiment. (A) of FIG. 17 corresponds to (A) of FIG. 16, (B) of FIG. 17 corresponds to (B) of FIG. 16, and (C) of FIG. 17 corresponds to (C) of FIG. 16. (D) of FIG. 17 illustrates a comparative example in which the separation suppression device 10 is not installed (that is, in a case of only a cylinder). As illustrated in (A) of FIG. 17, as a result of generation of vortices having alternately different phases, an increase in turbulence was promoted, and a separation control effect was maximized.

[Summary of Present Embodiment]

According to the embodiment described above, the separation suppression device 10 is provided at the position where the fluid flows, and suppresses the separation of the flow by strengthening the turbulence. The position where the separation suppression device 10 is provided may be, for example, the surface of the moving object. More specifically, the position where the separation suppression device 10 is provided may be the position where the pressure of the fluid decreases, that is, the broken line portion indicated by the reference numeral 21 in FIG. 4. The shape of the separation suppression device 10 in the cross section orthogonal to the flow of the fluid has the rising portion 32 and the falling portion 31. The shape of the concave portion 30, which is a region surrounded by the rising portion 32, the falling portion 31, the upper base portion, and the lower base portion, is the substantially trapezoidal shape in which the length of the lower base portion is shorter than the upper base portion. With such a shape, the separation suppression device 10 can generate the vortices having different rotation directions as illustrated in FIG. 9. By generating such vortices having different rotation directions, the separation suppression device 10 can effectively promote the turbulence transition of the fluid. According to the present embodiment, it is possible to effectively promote the turbulence transition of the fluid by generating a pair of vortices having a rotation axis in the flow direction and having opposite rotation directions, which is one of unstable solutions of a Navier-Stokes equation as a governing equation.

As illustrated in FIG. 5 and the like, the separation suppression device 10 is very small. The separation suppression device 10 may be, for example, millimeter-sized or micro-sized. Since the separation suppression device 10 is very small as compared with the vortex generator according to the related art, the shape of the separation suppression device 10 itself is less likely to be a resistance. In addition, since the separation suppression device 10 is very small as compared with the vortex generator according to the related art, unlike the vortex generator according to the related art, an aesthetic appearance of an object (for example, a moving object) on which the separation suppression device 10 is installed is not impaired.

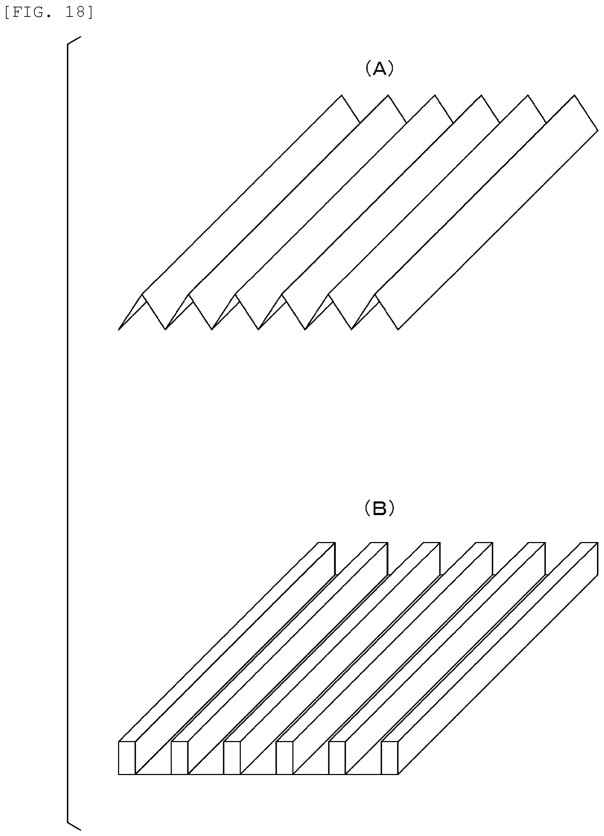

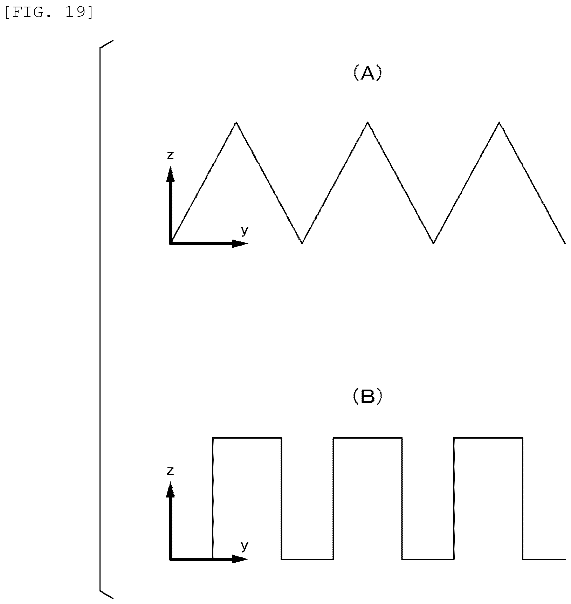

Here, as an example of the related art, there are riblets used for a purpose of reducing a resistance of a fluid. The riblets according to the related art and the separation suppression device 10 according to the present embodiment are common in an application of reducing a resistance Cd (resistance Cd is determined by a sum of a pressure resistance Cp and a frictional resistance Cf). However, the riblets according to the related art and the separation suppression device 10 according to the present embodiment are different from each other in terms of shape, installation location, mechanism, and effect. Hereinafter, differences between the riblets according to the related art and the separation suppression device according to the present embodiment will be described. First, differences in shape will be described with reference to FIGS. 18 and 19.

FIG. 18 is a perspective view illustrating an example of the riblets according to the related art. (A) of FIG. 18 illustrates an example in which the ribs have a V shape, and (B) of FIG. 18 illustrates an example in which the ribs have a rectangular shape. As illustrated, the riblets according to the related art extend along a flow direction. In other words, a cross section of the riblets according to the related art in a y-z plane does not change along a direction in which a fluid flows (the same applies even when a position in an x direction changes). On the other hand, in the separation suppression device 10 according to the present embodiment, as illustrated in FIG. 6, a size of the concave portion 30 is maximized in the A-A cross section, and the size of the concave portion 30 decreases as a distance from the A-A cross section in the positive x direction or the negative x direction increases. As described above, the riblets according to the related art and the separation suppression device 10 according to the present embodiment have different shapes.

FIG. 19 is a cross-sectional view in a span direction of an example of the riblets according to the related art. (A) of FIG. 19 illustrates an example in which the ribs have a V shape, and corresponds to (A) of FIG. 18. (B) of FIG. 19 illustrates an example in which the ribs have a rectangular shape, and corresponds to (B) of FIG. 18. As illustrated, the riblets according to the related art and the separation suppression device 10 according to the present embodiment have different shapes in a cross section in the span direction. In particular, as illustrated in FIG. 8, the separation suppression device 10 has the convex portion 40. On the other hand, as illustrated in FIG. 19, the riblets according to the related art do not have the convex portion 40 of the separation suppression device 10. As described above, the riblets according to the related art and the separation suppression device 10 according to the present embodiment have different shapes.

Next, differences in installation location between the riblets according to the related art and the separation suppression device 10 according to the present embodiment will be described. The riblets according to the related art are installed at portions where a flow is a turbulence on a surface. On the other hand, the separation suppression device 10 is installed at a portion where a flow is separated at a wake flow or the like. The portion where the flow is separated may be the broken line portion indicated by the reference numeral 21 in FIG. 4. Therefore, it can be said that the riblets according to the related art and the separation suppression device 10 according to the present embodiment are different from each other in terms of installation location.

Next, differences in mechanism between the riblets according to the related art and the separation suppression device according to the present embodiment will be described. The riblets according to the related art suppress a turbulence of a flow. On the other hand, the separation suppression device 10 according to the present embodiment amplifies a turbulence of a flow. Therefore, it can be said that the riblets according to the related art and the separation suppression device 10 according to the present embodiment are different from each other in terms of mechanism.

Next, differences in effect between the riblets according to the related art and the separation suppression device according to the present embodiment will be described. The riblets according to the related art reduce a turbulence frictional resistance Cf by suppressing a turbulence. On the other hand, the separation suppression device 10 according to the present embodiment amplifies a turbulence to adhere a flow and reduce a pressure resistance Cp. Therefore, it can be said that the riblets according to the related art and the separation suppression device according to the present embodiment are different from each other in terms of effect.

Although the aspects for carrying out the invention have been described above using the embodiment, the invention is not limited to the embodiment at all, and various modifications and substitutions can be made without departing from the gist of the invention.

Industrial Applicability

According to the invention, it is possible to effectively promote a turbulence transition of a fluid by generating a pair of vortices having a rotation axis in a flow direction and having opposite rotation directions, which is one of unstable solutions of a Navier-Stokes equation as a governing equation, and to reduce a resistance caused by a shape of the separation suppression device itself.

Reference Signs List

10:   separation suppression device
20:   surface
30:   concave portion
31:   falling portion
32:   rising portion
40:   convex portion
50:   flat portion

**Claims**

1. A separation suppression device that is to be provided at a position where a fluid flows to suppress separation of a flow by strengthening a turbulence, wherein

   a shape in a cross section orthogonal to the flow of the fluid has a rising portion and a falling portion, and a shape of a region surrounded by the rising portion, the falling portion, an upper base portion connecting one end of the rising portion and one end of the falling portion, and a lower base portion connecting the other end of the rising portion and the other end of the falling portion is a substantially trapezoidal shape in which a length of the lower base portion is shorter than that of the upper base portion.

2. The separation suppression device according to claim 1, wherein

   a rotation direction of a vortex generated in the rising portion and a rotation direction of a vortex generated in the falling portion are different from each other, and the lower base portion has a convex portion configured to separate the vortex generated in the rising portion and the vortex generated in the falling portion from each other.

3. The separation suppression device according to claim 2, wherein

   a shape of the convex portion in the cross section orthogonal to the flow of the fluid is a substantially trapezoidal shape in which a side of the lower base portion is a lower base, a side of the upper base portion is an upper base, and the upper base is shorter than the lower base, and a height of the substantially trapezoidal shape is lower than a height of the substantially trapezoidal shape having the rising portion and the falling portion as sides.

4. The separation suppression device according to any one of claims 1 to 3, wherein the substantially trapezoidal shape having the rising portion and the falling portion as sides is provided continuously in a direction orthogonal to the flow of the fluid.

5. The separation suppression device according to claim 4, wherein a flat portion substantially parallel to the upper base portion is provided between the rising portion and the falling portion in each of a plurality of the continuous substantially trapezoidal shapes.

6. The separation suppression device according to claim 5, wherein the flat portion has a concave portion having a substantially trapezoidal shape in which a side of the lower base portion is a lower base, a side of the upper base portion is an upper base, and the upper base is longer than the lower base in the cross section orthogonal to the flow of the fluid.

7. The separation suppression device according to any one of claims 1 to 3, wherein the lengths of the upper base portion and the lower base portion are set according to an environment in which the separation suppression device is to be used.

8. The separation suppression device according to claim 4, wherein a cycle y$^+$ in which a plurality of the continuous substantially trapezoidal shapes are arranged in the cross section orthogonal to the flow of the fluid satisfies the following equation (1), where a position in a span direction is y, a velocity of the fluid is u$_\tau$, and a dynamic viscosity coefficient is $\nu$:
   [Math. 1]

$$y^+ = yu_\tau/\nu \sim 100 \qquad \cdots (1)$$

9. A moving object comprising:

   the separation suppression device according to any of claims 1 to 3, wherein the separation suppression device is attached to a portion where a forward pressure gradient of a surface pressure caused by the fluid decreases in the vicinity of a separation position of the fluid.

[FIG. 1]

[FIG. 2]

[FIG. 3]

[FIG. 4]

[FIG. 5]

[FIG. 6]

[FIG. 7]

[FIG. 8]

[FIG. 9]

[FIG. 10]

[FIG. 11]

[FIG. 12]

| FLOW VELOCITY [km/h] | FLOW VELOCITY [m/s] | REYNOLDS NUMBER | MACH NUMBER |
|---|---|---|---|
| 100 | 27.78 | 18372 | 0.081 |
| 120 | 33.33 | 22046 | 0.097 |
| 140 | 38.89 | 25720 | 0.113 |

[FIG. 13]

(A)

(B)

[FIG. 14]

(A)

(B)

[FIG. 15]

FLOW DIRECTION
FLOW

[FIG. 16]

[FIG. 17]

(A) DEVICE INSTALLATION POSITION

(B)

(C)

(D)

EP 4 745 414 A1

21

[FIG. 18]

(A)

(B)

[FIG. 19]

(A)

(B)

## INTERNATIONAL SEARCH REPORT

| International application No. |
| --- |
| **PCT/JP2024/022835** |

| A. | CLASSIFICATION OF SUBJECT MATTER |
| --- | --- |

*F15D 1/12*(2006.01)i; *B64C 23/06*(2006.01)i
FI: F15D1/12; B64C23/06

According to International Patent Classification (IPC) or to both national classification and IPC

| B. | FIELDS SEARCHED |
| --- | --- |

Minimum documentation searched (classification system followed by classification symbols)

F15D1/12; B64C23/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2019-521913 A (3M INNOVATIVE PROPERTIES COMPANY) 08 August 2019 (2019-08-08)<br>paragraphs [0018]-[0063], fig. 1-8 | 1-9 |
| X | JP 2005-522644 A (RÖHM GMBH & CO. KG) 28 July 2005 (2005-07-28)<br>paragraphs [0012]-[0028], fig. 1a-1c | 1-4, 7-9 |
| A | JP 2011-185410 A (NATIONAL UNIVERSITY CORPORATION TOKYO UNIVERSITY OF AGRICULTURE AND TECHNOLOGY) 22 September 2011 (2011-09-22)<br>entire text, all drawings | 1-9 |
| A | US 2010/0108813 A1 (LANG, Amy W.) 06 May 2010 (2010-05-06)<br>entire text, all drawings | 1-9 |

| ☐ Further documents are listed in the continuation of Box C. | ☑ See patent family annex. |
| --- | --- |

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **02 September 2024** | **10 September 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

International application No.

**PCT/JP2024/022835**

| Patent document cited in search report | | | Publication date (day/month/year) | Patent family member(s) | | | Publication date (day/month/year) |
|---|---|---|---|---|---|---|---|
| JP | 2019-521913 | A | 08 August 2019 | US | 2019/0202547 | A1 | |
| | | | | paragraphs [0028]-[0073], fig. 1-8 | | | |
| | | | | WO | 2017/222826 | A1 | |
| | | | | CA | 3027372 | A1 | |
| | | | | CN | 109311532 | A | |
| JP | 2005-522644 | A | 28 July 2005 | US | 2004/0155150 | A1 | |
| | | | | paragraphs [0018]-[0041], fig. 1a-1c | | | |
| | | | | WO | 2003/087604 | A1 | |
| | | | | DE | 10217111 | A1 | |
| | | | | CN | 1507544 | A | |
| | | | | KR | 10-2004-0100839 | A | |
| JP | 2011-185410 | A | 22 September 2011 | (Family: none) | | | |
| US | 2010/0108813 | A1 | 06 May 2010 | WO | 2008/121418 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023113035 A
- JP S5131498 A